# EUROPEAN PATENT SPECIFICATION

(11) **EP 2 781 710 B1**
(45) Date of publication and mention of the grant of the patent: **17.08.2016**
(21) Application number: 11875752.5
(22) Date of filing: 18.11.2011
(51) Int. Cl.: F01N 3/08, B01D 53/94, F01N 3/20, F01N 3/10

(54) **EXHAUST GAS PURIFICATION SYSTEM FOR INTERNAL COMBUSTION ENGINE**
ABGASREINIGUNGSSYSTEM FÜR EINEN VERBRENNUNGSMOTOR
SYSTÈME D'ÉPURATION DES GAZ D'ÉCHAPPEMENT POUR MOTEUR À COMBUSTION INTERNE

(43) Date of publication of application: 24.09.2014
(73) Proprietor: Toyota Jidosha Kabushiki Kaisha, Toyota-shi, Aichi 471-8571 (JP)
(72) Inventor: MATSUO, Junichi, Toyota-shi Aichi 471-8571 (JP); ITO, Kazuhiro, Toyota-shi Aichi 471-8571 (JP); NAKAYAMA, Shigeki, Toyota-shi Aichi 471-8571 (JP); NISHIOKA, Hiromasa, Toyota-shi Aichi 471-8571 (JP); IMAI, Daichi, Toyota-shi Aichi 471-8571 (JP); TSUKAMOTO, Yoshihisa, Toyota-shi Aichi 471-8571 (JP); OTSUKI, Hiroshi, Toyota-shi Aichi 471-8571 (JP)
(74) Representative: TBK
(86) International application number: PCT/JP2011/076698
(87) International publication number: WO 2013/073054

(56) References cited:
- EP-A1- 2 386 523
- WO-A1-2010/066564
- DE-A1-102006 044 080
- JP-A- S5 593 917
- JP-U- S6 338 616
- JP-U- H02 119 918

## Description

### [TECHNICAL FIELD]

The present invention relates to an exhaust gas purification system for an internal combustion engine in which an exhaust gas purification catalyst is provided in an exhaust passage.

### [BACKGROUND ART]

As an example of an exhaust gas purification system for an internal combustion engine, a system in which an exhaust gas purification catalyst such as an NOx selective reduction catalyst, an NOx storage reduction catalyst, or an oxidation catalyst is provided in an exhaust passage is known. In such an exhaust gas purification system, a technique of supplying a gaseous reducing agent to the exhaust gas purification catalyst has been developed.
Patent Document 1 discloses a technique of heating a reducing agent solid or solution stored in a storage portion to generate a gaseous reducing agent and supplying the gaseous reducing agent to a portion of an exhaust passage upstream of an NOx catalyst.
Patent Document 2 discloses a technique of heating a reducing agent solution to generate a gaseous reducing agent, storing the gaseous reducing agent in a reducing agent storage portion, and adding the reducing agent stored in the reducing agent storage portion from a reducing agent adding valve to an exhaust gas. In Patent Document 2, when the pressure of the reducing agent stored in the reducing agent storage portion is lower than a predetermined lower limit pressure, at least one of a valve opening period or a valve opening cycle of the reducing agent adding valve is decreased. Moreover, the lower limit pressure is set to be higher than an exhaust gas pressure.
Patent Document 3 discloses an ammonia supply device including an ammonia absorber, a conductive element, a mixture, a tank and an electrode. Ammonia is stored in and released from the ammonia absorber.

### [Prior Art Documents]

### [PATENT DOCUMENTS]

Patent Document 1: Japanese Patent Application Publication No. 2010-138883
Patent Document 2: Japanese Patent Application Publication No. 2011-132919
Patent Document 3: European Patent Application EP 2 386 523 A1

### [SUMMARY OF THE INVENTION]

### [PROBLEMS TO BE SOLVED BY THE INVENTION]

It is an object of the present invention to provide an exhaust gas purification system for supplying a gaseous reducing agent to an exhaust gas purification catalyst provided in an exhaust passage, capable of controlling the amount of supply of the reducing agent to the exhaust gas purification catalyst with high accuracy.

### [MEANS FOR SOLVING THE PROBLEMS]

An exhaust gas purification system for an internal combustion engine according to the present invention includes: an exhaust gas purification catalyst that is provided in an exhaust passage of the internal combustion engine; an adding apparatus that adds a gaseous reducing agent into an exhaust gas flowing through an exhaust passage upstream of the exhaust gas purification catalyst; and a pressure controller that controls the pressure of adding the reducing agent from the adding apparatus to the exhaust gas in accordance with an operating condition of the internal combustion engine.

When the operating condition of the internal combustion engine changes, the flow rate and the pressure of exhaust gas flowing through an exhaust passage change. Thus, by controlling the pressure of adding the reducing agent according to the operating condition of the internal combustion engine, it is possible to control the amount of supply of the reducing agent to the exhaust gas purification catalyst with high accuracy.

In the present invention, when the flow rate of the exhaust gas flowing into the exhaust gas purification catalyst is small, the pressure controller may decrease the pressure of adding the reducing agent, as compared to when the flow rate of the exhaust gas is large.

Moreover, when the operating condition of the internal combustion engine changes, the flow rate (the NOx concentration of the exhaust gas) of NOx flowing through the exhaust passage also changes. Thus, in the present invention, if the exhaust gas purification catalyst is an NOx selective reduction catalyst, when the flow rate of NOx flowing into the exhaust gas purification catalyst is small, the pressure of adding the reducing agent may be decreased, as compared to when the flow rate of NOx is large.

Moreover, if the exhaust gas pressure in the exhaust passage is high, the flow rate of the reducing agent added from the adding apparatus may become smaller than the target flow rate when the pressure of adding the reducing agent is low.

Thus, in the present invention, when an exhaust gas pressure in an exhaust passage is high, the pressure controller may increase the pressure of adding the reducing agent, as compared to when the exhaust gas pressure is low.

According to this configuration, it is possible to control the flow rate of the reducing agent added from the adding apparatus with high accuracy according to the target flow rate.

Moreover, if the target flow rate of the reducing agent added from the adding apparatus to the exhaust gas is small, it may become difficult to control the flow rate of the reducing agent to the target flow rate with high accuracy when the pressure of adding the reducing agent is high,.

Thus, the exhaust gas purification system for the internal combustion engine according to the present invention may further include a setting unit that sets a target flow rate of the reducing agent added from the adding apparatus to the exhaust gas, and when the target flow rate of the reducing agent added from the adding apparatus to the exhaust gas is small the pressure controller may decrease the pressure of adding the reducing agent, as compared to when the target flow rate is large.

According to this configuration, it is possible to control the flow rate of the reducing agent added from the adding apparatus with high accuracy according to the target flow rate. Thus, it is possible to control the amount of supply of the reducing agent to the exhaust gas purification catalyst with high accuracy.

### [ADVANTAGEOUS EFFECT OF THE INVENTION]

According to the present invention, it is possible to provide an exhaust gas purification system for supplying a gaseous reducing agent to an exhaust gas purification catalyst provided in an exhaust passage, capable of controlling the amount of supply of the reducing agent to the exhaust gas purification catalyst with high accuracy.

### [brief description of the drawings]

Fig. 1 is a diagram illustrating a schematic configuration of an intake and exhaust system of an internal combustion engine according to a first embodiment.
Fig. 2 is a diagram illustrating a relation among a valve opening period τ when the adding valve is periodically opened and closed to add ammonia from the adding valve, a flow rate Qadd of ammonia added from an adding valve, and the pressure of adding ammonia from the adding valve according to the first embodiment.
Fig. 3 is a flowchart illustrating the flow of controlling the pressure of adding ammonia from the adding valve according to the first embodiment.
Fig. 4 is a diagram illustrating a schematic configuration of an intake and exhaust system of an internal combustion engine according to a modification of the first embodiment.
Fig. 5 is a flowchart illustrating the flow of controlling the pressure of adding ammonia from the adding valve according to the modification of the first embodiment.
Fig. 6 is a flowchart illustrating the flow of controlling the pressure of adding ammonia from an adding valve according to a second embodiment.
Fig. 7 is a flowchart illustrating the flow of controlling the pressure of adding ammonia from an adding valve according to a modification of the second embodiment.

### [EMBODIMENTS FOR CARRYING OUT THE INVENTION]

Hereinafter, specific embodiments of the present invention will be described based on drawings. The dimensions, materials, shapes, relative arrangements, and the like of the constituent components described in this embodiment are not intended to limit the technical scope of the present invention unless otherwise stated.

### <First embodiment>

In this embodiment, a case where the present invention is applied to an exhaust gas purification system of a diesel engine for driving vehicles will be described by way of an example. The internal combustion engine according to the present invention is not limited to the diesel engine but may be a gasoline engine or the like.

### [Schematic configuration of intake and exhaust system]

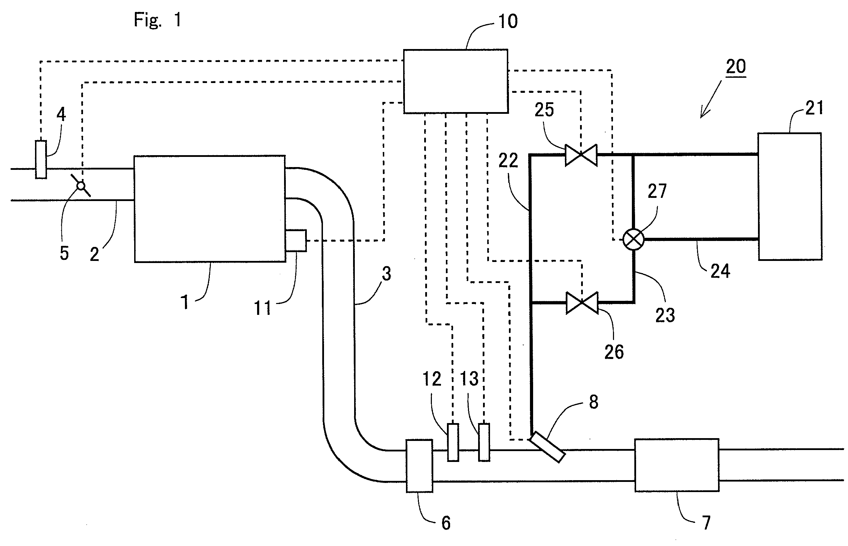

Fig. 1 is a diagram illustrating a schematic configuration of an intake and exhaust system of an internal combustion engine according to this embodiment. An internal combustion engine 1 is a diesel engine for driving vehicles. An intake passage 2 and an exhaust passage 3 are connected to the internal combustion engine 1.

An air flow meter 4 and a throttle valve 5 are provided in the intake passage 2. The air flow meter 4 detects the amount of air flowing into the internal combustion engine 1. The throttle valve 5 regulates a flow rate of intake air passing through the intake passage 2 by changing the cross-sectional area of the intake passage 2.

An NOx catalyst 7 is provided in the exhaust passage 3. The NOx catalyst 7 is an NOx selective reduction catalyst that reduces NOx in exhaust gas using ammonia as a reducing agent. An oxidation catalyst 6 is provided in a portion of the exhaust passage 3 upstream of the NOx catalyst 7 as a front catalyst. The front catalyst is not limited to the oxidation catalyst but may be a catalyst (for example, an NOx storage reduction catalyst) having an oxidation ability.

A pressure sensor 12 and an NOx sensor 13 are provided in a portion of the exhaust passage 3 downstream of the oxidation catalyst 6 and closer to the upstream side than the NOx catalyst 7. The pressure sensor 12 detects the pressure of the exhaust gas flowing through the exhaust passage 3. The NOx sensor 13 detects an NOx concentration of the exhaust gas flowing through the exhaust passage 3.

Moreover, an adding valve 8 that adds a reducing agent to the exhaust gas is provided in a portion of the exhaust passage 3 downstream of the oxidation catalyst 6 and closer to the upstream side than the NOx catalyst 7. The adding valve 8 adds ammonia gas as the reducing agent. The ammonia added from the adding valve 8 is supplied to the NOx catalyst 7.

An ammonia supply apparatus 20 supplies the ammonia gas to the adding valve 8. The ammonia supply apparatus 20 includes a tank 21, a first supply passage 22, a second supply passage 23, a return passage 24, a first control valve 25, a second control valve 26, and a pressure reducing valve 27.

Ammonia gas is stored in the tank 21. In this embodiment, a storage portion that stores ammonia compound solid or solution may be provided separately from the tank 21. In this case, the ammonia compound stored in the storage portion is heated to generate ammonia gas, and the generated ammonia gas is stored in the tank 21.

One end of the first supply passage 22 is connected to the tank 21. The other end of the first supply passage 22 is connected to the adding valve 8. The first control valve 25 that opens or blocks the first supply passage 22 is provided in the first supply passage 22. When the first control valve 25 is opened so that the first supply passage 22 is opened, ammonia is supplied from the tank 21 to the adding valve 8 through the first supply passage 22.

Moreover, the second supply passage 23 is connected to the first supply passage 22 so as to bypass the first control valve 25. That is, one end of the second supply passage 23 is connected to a portion of the first supply passage 22 upstream of the first control valve 25, and the other end of the second supply passage 23 is connected to a portion of the first supply passage 22 downstream of the first control valve 25.

The second control valve 26 that opens or blocks the second supply passage 23 is provided in the second supply passage 23. When the second control valve 26 is opened so that the second supply passage 23 is opened, ammonia is supplied from the tank 21 to the adding valve 8 through the second supply passage 23.

Moreover, one end of the return passage 24 is connected to a portion of the second supply passage 23 upstream of the second control valve 26. The other end of the return passage 24 is connected to the tank 21. The pressure reducing valve 27 is provided in the connection portion between the second supply passage 23 and the return passage 24. When the pressure reducing valve 27 is opened, a portion of the ammonia flowing through the second supply passage 23 is returned to the tank 21 through the return passage 24.

Thus, when the second control valve 26 and the pressure reducing valve 27 are opened so that ammonia is supplied to the adding valve 8 through the second supply passage 23, the amount of ammonia supplied decreases as compared to when the first control valve 25 is opened so that the ammonia is supplied to the adding valve 8 through the first supply passage 22. That is, the pressure of supplying ammonia to the adding valve 8 decreases. As a result, the pressure of adding ammonia from the adding valve 8 decreases.

An electronic control unit (ECU) 10 for controlling the internal combustion engine 1 is arranged in the internal combustion engine 1. The air flow meter 4, the pressure sensor 12, and the NOx sensor 13 are electrically connected to the ECU 10. A crank position sensor 11 of the internal combustion engine 1 is electrically connected to the ECU 10. The output signals of the respective sensors are input to the ECU 10. The ECU 10 calculates an engine rotation speed of the internal combustion engine 1 based on the output value of the crank position sensor 11.

Further, the throttle valve 5, the adding valve 8, the first control valve 25, the second control valve 26, and the pressure reducing valve 27 are electrically connected to the ECU 10. The operations of these devices are controlled by the ECU 10.

For example, when ammonia serving as a reducing agent is to be supplied to the NOx catalyst 7, the ECU 10 opens and closes the adding valve 8 at a relatively short cycle to thereby add ammonia gas from the adding valve 8 to the exhaust gas. Moreover, the ECU 10 adjusts the valve opening period when opening and closing the adding valve 8 to thereby control the flow rate of the ammonia added from the adding valve 8 to the exhaust gas.

### [Control of adding reducing agent]

Here, the larger the flow rate of the exhaust gas in the exhaust passage 3 and the higher the NOx concentration of the exhaust gas, the larger is the flow rate of NOx flowing into the NOx catalyst 7. Moreover, the larger the flow rate of NOx flowing into the NOx catalyst 7, the larger is the amount of ammonia which is a reducing agent required to be supplied to the NOx catalyst 7.

Thus, in this embodiment, a target flow rate (hereinafter referred to as a target adding amount) when adding ammonia from the adding valve 8 is changed according to the flow rate of NOx flowing into the NOx catalyst 7. That is, the larger the flow rate of the exhaust gas in the exhaust passage 3 and the higher the NOx concentration of the exhaust gas (that is, the larger the flow rate of NOx flowing into the NOx catalyst 7), the larger is the target adding amount. In other words, the smaller the flow rate of the exhaust gas in the exhaust passage 3 and the lower the NOx concentration of the exhaust gas (that is, the smaller the flow rate of the NOx flowing into the NOx catalyst 7), the smaller is the target adding amount.

Here, in order to change the flow rate of the ammonia added from the adding valve 8 with high responsiveness, it is necessary to increase the pressure of adding ammonia from the adding valve 8 to some extent. However, if the pressure of adding ammonia from the adding valve 8 is high, when the target adding amount is small, it may be difficult to control the flow rate of ammonia added from the adding valve 8 to the target adding amount with high accuracy.

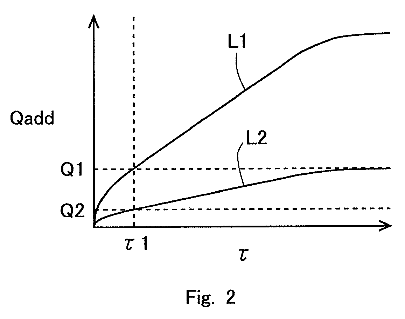

Fig. 2 is a diagram illustrating a relation among a valve opening period τ when the adding valve is periodically opened and closed to add ammonia from the adding valve, a flow rate Qadd of ammonia added from the adding valve 8, and the pressure of adding ammonia from the adding valve 8. In Fig. 2, the horizontal axis represents the valve opening period τ when the adding valve 8 is periodically opened and closed to add ammonia from the adding valve 8, and the vertical axis represents the flow rate Qadd of ammonia added from the adding valve 8.

Moreover, as described above, in this embodiment, when the second control valve 26 and the pressure reducing valve 27 are opened to supply ammonia to the adding valve 8 through the second supply passage 23, the pressure of adding ammonia from the adding valve 8 decreases as compared to when the first control valve 25 is opened to supply ammonia to the adding valve 8 through the first supply passage 22. Here, the pressure of adding ammonia from the adding valve 8 when the first control valve 25 is opened to supply ammonia to the adding valve 8 through the first supply passage 22 will be referred to as P1. On the other hand, the pressure of adding ammonia from the adding valve 8 when the second control valve 26 and the pressure reducing valve 27 are opened to supply ammonia to the adding valve 8 through the second supply passage 23 will be referred to as P2 (<P1).

In Fig. 2, L1 illustrates a relation between the valve opening period τ and the ammonia flow rate Qadd when the pressure of adding ammonia from the adding valve 8 is P1, and L2 illustrates a relation between the valve opening period τ and the ammonia flow rate Qadd when the pressure of adding ammonia from the adding valve 8 is P2. Further, in Fig. 2, τ1 indicates a lower limit (hereinafter referred to simply as a lower limit valve opening period) of the valve opening period of the adding valve 8, in which the flow rate of the ammonia added from the adding valve 8 can be controlled to the target adding amount with high accuracy.

As illustrated in Fig. 2, the longer the valve opening period τ of the adding valve 8, the larger is the flow rate Qadd of ammonia added from the adding valve 8. Moreover, if the valve opening period τ of the adding valve 8 is the same, the flow rate Qadd of ammonia added from the adding valve 8 is larger when the pressure of adding ammonia from the adding valve 8 than when the adding pressure is low. Thus, when the pressure of adding ammonia from the adding valve 8 is P1, the flow rate of the ammonia added from the adding valve 8, corresponding to the lower limit valve opening period τ1 is larger than that when the pressure of adding ammonia from the adding valve 8 is P2 (Q1>Q2).

Thus, in this embodiment, the first control valve 25, the second control valve 26, and the pressure reducing valve 27 are controlled according to the target adding amount, whereby the pressure of adding ammonia from the adding valve 8 is changed.

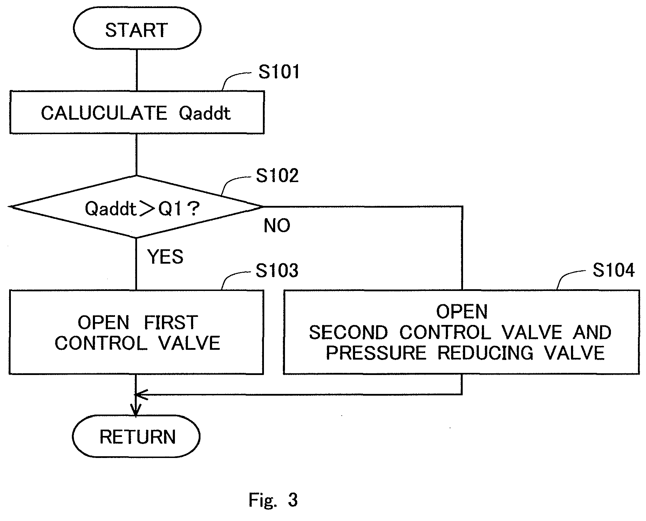

Hereinafter, the flow of controlling the pressure of adding ammonia from the adding valve according to this embodiment will be described based on the flowchart illustrated in Fig. 3. This flow is stored in advance in the ECU 10 and is repeatedly executed by the ECU 10.

In this flow, first, in step S101, the target adding amount Qaddt is calculated based on the exhaust gas flow rate and the NOx concentration of exhaust gas in the exhaust passage 3. The relation among the exhaust gas flow rate and the NOx concentration of the exhaust gas in the exhaust passage 3 and the target adding amount Qaddt is obtained in advance based on experiments or the like and is stored in the ECU 10 as a map or a function. In step S101, the target adding amount Qaddt is calculated using the map or the function.

The exhaust gas flow rate can be calculated based on the amount of intake air detected by the air flow meter 4 and the engine rotation speed of the internal combustion engine 1. Moreover, the NOx concentration of the exhaust gas can be detected by the NOx sensor 13.

Subsequently, in step S102, it is determined whether the target adding amount Qaddt is larger than a threshold Q1. Here, the threshold Q1 is the flow rate of ammonia added from the adding valve 8, corresponding to the lower limit valve opening period τ1 when the pressure of adding ammonia from the adding valve 8 is P1 as illustrated in Fig. 2. That is, the threshold Q1 is the lower limit of the target adding amount in which the flow rate of ammonia added from the adding valve 8 can be controlled to the target adding amount Qaddt with high accuracy when the pressure of adding ammonia from the adding valve 8 is P1. Such a threshold Q1 is obtained in advance based on experiments or the like and is stored in the ECU 10.

When a positive determination result is obtained in step S102, the process of step S103 is executed. In step S103, the first control valve 25 is opened and ammonia is supplied from the tank 21 to the adding valve 8 through the first supply passage 22. In this case, the second control valve 26 and the pressure reducing valve 27 are closed. In this way, the pressure of adding ammonia from the adding valve 8 is controlled to P1.

On the other hand, when a negative determination result is obtained in step S102, the process of step S104 is executed. In step S104, the second control valve 26 and the pressure reducing valve 27 are opened and ammonia is supplied from the tank 21 to the adding valve 8 through the second supply passage 23. Moreover, a portion of the ammonia flowing through the second supply passage 23 is returned to the tank 21 through the return passage 24. In this case, the first control valve 25 is closed. In this way, the pressure of adding ammonia from the adding valve 8 is controlled to P2.

According to the flow, when the target adding amount Qaddt is equal to or smaller than the threshold Q1, it is controlled such that the pressure of adding ammonia from the adding valve 8 is set to be lower than that when the target adding amount Qaddt is larger than the threshold Q1. In this way, it is possible to control the flow rate of ammonia added to the adding valve 8 to the target adding amount Qaddt with high accuracy. As a result, it is possible to control the amount of supply of ammonia to the NOx catalyst 7 with high accuracy.

In this embodiment, as described above, the target adding amount is set according to the flow rate of exhaust gas or NOx flowing into the NOx catalyst 7. Thus, the pressure of adding ammonia from the adding valve 8 may be changed based on the flow rate of exhaust gas or NOx flowing into the NOx catalyst 7. That is, when the flow rate of exhaust gas or NOx flowing into the NOx catalyst 7 is equal to or smaller than the threshold, the pressure of adding ammonia from the adding valve 8 may be set to be lower than that when the flow rate of exhaust gas or NOx flowing into the NOx catalyst 7 is larger than the threshold.

Moreover, the adding pressure control according to this embodiment can be applied to when a gaseous reducing agent other than ammonia is added from the adding valve 8 and the reducing agent is supplied to the NOx catalyst 7. Further, in this embodiment, another exhaust gas purification catalyst (an NOx storage reduction catalyst, an oxidation catalyst, or the like) may be provided in the exhaust passage 3 instead of the NOx catalyst 7. In this case, the adding pressure control according to this embodiment can be applied to when a gaseous reducing agent is added from the adding valve 8 in order to supply a reducing agent to the exhaust gas purification catalyst.

### [Modification]

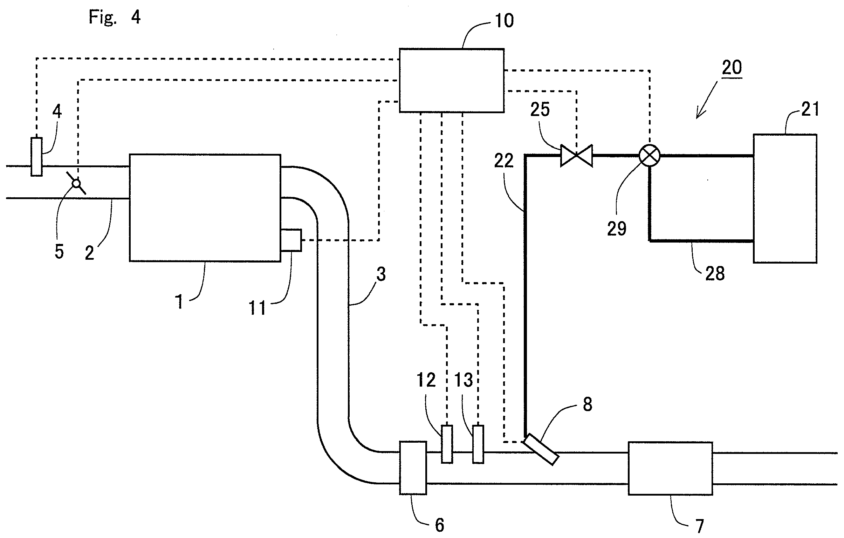

Next, a modification of this embodiment will be described. Fig. 4 is a diagram illustrating a schematic configuration of an intake and exhaust system of an internal combustion engine according to this modification. In this modification, the configuration of the ammonia supply apparatus 20 is different from the configuration illustrated in Fig. 1.

The ammonia supply apparatus according to this modification includes a return passage 28 and a pressure reducing valve 29 instead of the second supply passage 23, the second control valve 26, the return passage 24, and the pressure reducing valve 27 of the configuration illustrated in Fig. 1. In this modification, one end of the return passage 24 is connected to a portion of the first supply passage 22 upstream of the first control valve 25. The other end of the return passage 24 is connected to the tank 21. The pressure reducing valve 29 is provided in the connection portion between the first supply passage 22 and the return passage 28. The pressure reducing valve 29 is electrically connected to the ECU 10. Moreover, the operation of the pressure reducing valve 29 is controlled by the ECU 10. In this modification, when ammonia is supplied to the adding valve 8, the first control valve 25 is opened.

When the pressure reducing valve 29 is opened, a portion of the ammonia flowing through the first supply passage 22 is returned to the tank 21 through the return passage 28. However, unlike the pressure reducing valve 27 of the configuration illustrated in Fig. 1, the pressure reducing valve 29 can control the flow rate of ammonia flowing into the return passage 28 to be variable by adjusting the opening thereof.

That is, in this modification, by changing the flow rate of the ammonia returned to the tank 21 through the return passage 28, it is possible to change the flow rate of ammonia supplied from the tank 21 to the adding valve 8 through the first supply passage 22. In this way, it is possible to change the pressure of supplying ammonia to the adding valve 8. As a result, it is possible to control the pressure of adding ammonia from the adding valve 8.

Thus, in this modification, the target adding pressure which is the pressure of adding ammonia from the adding valve 8, corresponding to the target adding amount is calculated. Moreover, the opening of the pressure reducing valve 29 is controlled based on the calculated target adding pressure.

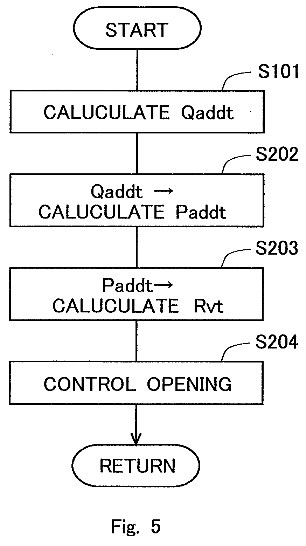

Next, the flow of controlling the pressure of adding ammonia from the adding valve according to this modification will be described based on the flowchart illustrated in Fig. 5. This flow is stored in advance in the ECU 10 and is repeatedly executed by the ECU 10.

In this flow, first, in step S101, the target adding amount Qaddt is calculated based on the exhaust gas flow rate and the NOx concentration of exhaust gas in the exhaust passage 3 similarly to the flow illustrated in Fig 3. Subsequently, in step S202, the target adding pressure Paddt which is the pressure of adding ammonia from the adding valve 8 is calculated based on the target adding amount Qaddt.

Here, the target adding pressure Paddt is the adding pressure in which the flow rate of ammonia added from the adding valve 8 can be controlled to the target adding amount Qaddt with high accuracy. The smaller the target adding amount Qaddt, the lower is the target adding pressure Paddt. Such a relation between the target adding amount Qaddt and the target adding pressure Paddt is obtained in advance based on experiments or the like and is stored in the ECU 10 as a map or a function. In step S202, the target adding pressure Paddt is calculated using the map or the function.

Subsequently, in step S203, a target opening Rvt of the pressure reducing valve 29 is calculated based on the target adding pressure Paddt. Here, the target opening Rvt is the opening of the pressure reducing valve 29 in which the amount of supply of ammonia to the adding valve 8 reaches an amount corresponding to the target adding pressure Paddt. The lower the target adding pressure Paddt, the larger is the target opening Rvt of the pressure reducing valve 29 (that is, the larger is the flow rate of ammonia to be returned to the tank 21 through the return passage 28). Such a relation between the target adding pressure Paddt and the target opening Rvt is obtained in advance based on experiments or the like and is stored in the ECU 10 as a map or a function. In step S203, the target opening Rvt is calculated based on the map or the function.

Subsequently, in step S204 the opening of the pressure reducing valve 29 is controlled to the target opening Rvt. In this way, the pressure of adding ammonia from the adding valve 8 is controlled to the target adding pressure Paddt.

According to the flow, it is controlled such that the smaller the target adding amount Qaddt, the lower is the pressure of adding ammonia from the adding valve 8. In this way, it is possible to control the flow rate of ammonia added to the adding valve 8 to the target adding amount Qaddt with high accuracy.

In this modification, the pressure of adding ammonia from the adding valve 8 may be changed based on the flow rate of exhaust gas or NOx flowing into the NOx catalyst 7. That is, it may be controlled such that the smaller the flow rate of exhaust gas or NOx flowing into the NOx catalyst 7, the lower is the pressure of adding ammonia from the adding valve 8.

### <Second embodiment>

A schematic configuration of an intake and exhaust system of an internal combustion engine according to this embodiment is the same as that of the first embodiment. The control of adding reducing agent according to this embodiment will be described based on a difference from that of the first embodiment.

### [Control of adding reducing agent]

In this embodiment, similarly to the first embodiment, the pressure of adding ammonia from the adding valve 8 is changed according to the target adding amount. That is, when the target adding amount is small, the pressure of adding ammonia from the adding valve 8 is decreased as compared to when the target adding amount is large. However, if the pressure of adding ammonia from the adding valve 8 is decreased so that a difference between the adding pressure and the pressure of exhaust gas in the exhaust passage 3 is too small, the flow rate of ammonia added from the adding valve 8 may be smaller than the target adding amount Qaddt. That is, it may be difficult to control the flow rate of ammonia added from the adding valve 8 to the target adding amount Qaddt with high accuracy.

Thus, in this embodiment, the pressure of adding ammonia from the adding valve 8 is changed according to an exhaust gas pressure as well as the target adding amount.

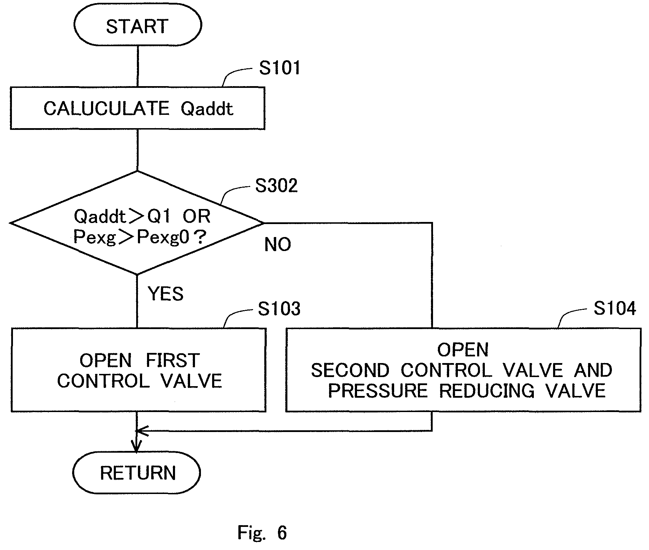

Next, the flow of controlling the pressure of adding ammonia from the adding valve according to this embodiment will be described based on the flowchart illustrated in Fig. 6. This flow is stored in advance in the ECU 10 and is repeatedly executed by the ECU 10. In this flow, step S102 of the flow illustrated in Fig. 3 is replaced with step S302. Thus, the process of step S302 only will be described and description of the other steps will not be provided.

In this flow, in step S302, it is determined whether the target adding amount Qaddt is larger than the threshold Q1 or the exhaust gas pressure Pexg is higher than predetermined pressure Pexg0. The exhaust gas pressure Pexg can be detected by the pressure sensor 12.

Here, the threshold Q1 is the same value as the threshold Q1 in step S102 of the flow illustrated in Fig. 3. Moreover, the predetermined pressure Pexg0 is an upper limit of the exhaust gas pressure in which the flow rate of the ammonia added from the adding valve 8 can be controlled to the target adding amount Qaddt with high accuracy when the pressure of adding ammonia from the adding valve 8 is P2. Such a predetermined pressure Pexg0 is obtained in advance based on experiments or the like and is stored in the ECU 10.

When a positive determination result is obtained in step S302, the process of step S103 is executed. When a negative determination result is obtained in step S302, the process of step S104 is executed.

According to the flow, when the exhaust gas pressure Pexg is higher than the predetermined pressure Pexg0 as well as when the target adding amount Qaddt is larger than the threshold Q1, the pressure of adding ammonia from the adding valve 8 is controlled to P1. Moreover, when the target adding amount Qaddt is equal to or smaller than the threshold Q1 and the exhaust gas pressure Pexg is equal to or smaller than the predetermined pressure Pexg0, the pressure of adding ammonia from the adding valve 8 is controlled to P2. That is, when the exhaust gas pressure Pexg is higher than the predetermined pressure Pexg0, it is controlled such that the pressure of adding ammonia from the adding valve 8 is set to be higher than that when the exhaust gas pressure Pexg is equal to or smaller than the predetermined pressure Pexg0. In this way, it is possible to control the flow rate of ammonia added to the adding valve 8 with high accuracy according to the target adding amount Qaddt. As a result, it is possible to control the amount of supply of ammonia to the NOx catalyst 7 with higher accuracy.

### [Modification]

Next, a modification of this embodiment will be described. A schematic configuration of an intake and exhaust system of an internal combustion engine according to this modification is the same as the modification of the first embodiment.

In this modification, the target adding pressure which is the pressure of adding ammonia from the adding valve 8 is calculated based on the exhaust gas pressure as well as the target adding amount. Moreover, the opening of the pressure reducing valve 29 is controlled based on the calculated target adding pressure.

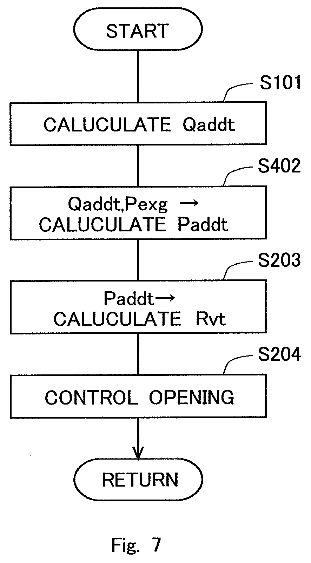

Next, the flow of controlling the pressure of adding ammonia from the adding valve according to this modification will described based on the flowchart illustrated in Fig. 7. This flow is stored in advance in the ECU 10 and is repeatedly executed by the ECU 10. In this flow, step S202 of the flow illustrated in Fig. 5 is replaced with step S402. Thus, the process of step S402 only will be described and description of the other steps will not be provided.

In this flow, in step S402, the target adding pressure Paddt which is the pressure of adding ammonia from the adding valve 8 is calculated based on the target adding amount Qaddt and the exhaust gas pressure Pexg. As described above, the smaller the target adding amount Qaddt, the lower is the target adding pressure Paddt. On the other hand, the higher the exhaust gas pressure Pexg, the higher is the target adding pressure Paddt. Such a relation among the target adding amount Qaddt, the exhaust gas pressure Pexg, and the target adding pressure Paddt is obtained in advance based on experiments or the like and is stored in the ECU 10 as a map or a function. In step S402, the target adding pressure Paddt is calculated using the map or the function.

According to the flow, it is controlled such that the smaller the target adding amount Qaddt, the lower is the adding pressure of adding ammonia from the adding valve 8 and that the higher the exhaust gas pressure Pexg, the higher is the adding pressure of adding ammonia from the adding valve 8. In this way, it is possible to control the flow rate of ammonia added from the adding valve 8 with high accuracy according to the target adding amount Qaddt.

### [DESCRIPTION OF THE REFERENCE SIGNS]

- 1:: internal combustion engine
- 2:: intake passage
- 3:: exhaust passage
- 4:: air flow meter
- 7:: NOx selective reduction catalyst
- 8:: adding valve
- 10:: ECU
- 11:: crank position sensor
- 12:: pressure sensor
- 13:: NOx sensor
- 20:: ammonia supply apparatus
- 21:: tank
- 22:: first supply passage
- 23:: second supply passage
- 24:: return passage
- 25:: first control valve
- 26:: second control valve
- 27:: pressure reducing valve

## Claims

1. An exhaust gas purification system for an internal combustion engine (1), comprising:
an exhaust gas purification catalyst (7) that is provided in an exhaust passage (3) of the internal combustion engine (1);
an adding apparatus (8) that adds a gaseous reducing agent into an exhaust gas flowing through an exhaust passage upstream of the exhaust gas purification catalyst (7);
a pressure controller (20) that controls the pressure of adding the reducing agent from the adding apparatus (8) to the exhaust gas in accordance with an operating condition of the internal combustion engine (1); and
a setting unit (10) that sets a target flow rate (Qaddt) of the reducing agent added from the adding apparatus (8) to the exhaust gas,
**characterized in that**
when the target flow rate (Qaddt) of the reducing agent added from the adding apparatus (8) to the exhaust gas is small, the pressure controller (20) decreases the pressure of adding the reducing agent, as compared to when the target flow rate (Qaddt) is large.

2. The exhaust gas purification system for an internal combustion engine (1) according to claim 1, wherein
when the flow rate of the exhaust gas flowing into the exhaust gas purification catalyst (7) is small, the pressure controller (20) decreases the pressure of adding the reducing agent, as compared to when the flow rate of the exhaust gas is large.

3. The exhaust gas purification system for an internal combustion engine (1) according to claim 1 or 2, wherein
the exhaust gas purification catalyst (7) is an NOx selective reduction catalyst, and
when the flow rate of NOx flowing into the exhaust gas purification catalyst (7) is small, the pressure controller (20) decreases the pressure of adding the reducing agent, as compared to when the flow rate of NOx is large.

4. The exhaust gas purification system for an internal combustion engine (1) according to any one of claims 1 to 3, wherein
when an exhaust gas pressure in the exhaust passage (3) is high, the pressure controller (20) increases the pressure of adding the reducing agent, as compared to when the exhaust gas pressure is low.

## Patentansprüche

1. Abgasreinigungssystem für einen Verbrennungsmotor (1), mit:
einem Abgasreinigungskatalysator (7), der in einem Auslasskanal (3) des Verbrennungsmotors (1) vorgesehen ist;
einer Zugabevorrichtung (8), die ein gasförmiges Reduktionsmittel in ein Abgas zugibt, das durch einen Auslasskanal stromaufwärts vom Abgasreinigungskatalysator (7) strömt;
einer Drucksteuerung (20), die den Druck, mit dem dem Abgas das Reduktionsmittel von der Zugabevorrichtung (8) zugegeben wird, in Übereinstimmung mit einem Betriebszustand des Verbrennungsmotors (1) steuert; und
einer Einstelleinheit (10), die einen Solldurchsatz (Qaddt) des Reduktionsmittels einstellt, das dem Abgas von der Zugabevorrichtung (8) zugegeben wird,
**dadurch gekennzeichnet, dass**
wenn der Solldurchsatz (Qaddt) des Reduktionsmittels, das dem Abgas von der Zugabevorrichtung (8) zugegeben wird, klein ist, die Drucksteuerung (20) den Druck, mit dem das Reduktionsmittel zugegeben wird, verglichen damit, wenn der Solldurchsatz (Qaddt) groß ist, verringert.

2. Abgasreinigungssystem für einen Verbrennungsmotor (1) nach Anspruch 1, wobei
wenn der Durchsatz des in den Abgasreinigungskatalysator (7) strömenden Abgases klein ist, die Drucksteuerung (20) den Druck, mit dem das Reduktionsmittel zugegeben wird, verglichen damit, wenn der Durchsatz des Abgases groß ist, verringert.

3. Abgasreinigungssystem für einen Verbrennungsmotor (1) nach Anspruch 1 oder 2, wobei
der Abgasreinigungskatalysator (7) ein selektiv NOx reduzierender Katalysator ist und
wenn der Durchsatz an NOx, das in den Abgasreinigungskatalysator (7) strömt, klein ist, die Drucksteuerung (20) den Druck, mit dem das Reduktionsmittel zugegeben wird, verglichen damit, wenn der Durchsatz an NOx groß ist, verringert.

4. Abgasreinigungssystem für einen Verbrennungsmotor (1) nach einem der Ansprüche 1 bis 3, wobei
wenn ein Abgasdruck in dem Auslasskanal (3) hoch ist, die Drucksteuerung (20) den Druck, mit dem das Reduktionsmittel zugegeben wird, verglichen damit, wenn der Abgasdruck gering ist, erhöht.

## Revendications

1. Système de purification des gaz d'échappement pour un moteur à combustion interne (1), comprenant :
un catalyseur de purification des gaz d'échappement (7) qui est prévu dans un passage d'échappement (3) du moteur à combustion interne (1) ;
un appareil d'ajout (8) qui ajoute un agent de réduction gazeux dans un gaz d'échappement s'écoulant par un passage d'échappement en amont du catalyseur de purification des gaz d'échappement (7) ;
un régulateur de pression (20) qui régule la pression de l'ajout de l'agent de réduction, de l'appareil d'ajout (8) aux gaz d'échappement selon une condition de fonctionnement du moteur à combustion interne (1) ; et
une unité de réglage (10) qui règle un débit cible (Qaddt) de l'agent de réduction ajouté par l'appareil d'ajout (8) aux gaz d'échappement,
**caractérisé en ce que**
lorsque le débit cible (Qaddt) de l'agent de réduction ajouté par l'appareil d'ajout (8) aux gaz d'échappement est faible, le régulateur de pression (20) diminue la pression d'ajout de l'agent de réduction, par rapport au moment où le débit cible (Qaddt) est important.

2. Système de purification des gaz d'échappement pour un moteur à combustion interne (1) selon la revendication 1, dans lequel
lorsque le débit des gaz d'échappement s'écoulant dans le catalyseur de purification de gaz d'échappement (7) est faible, le régulateur de pression (20) diminue la pression d'ajout de l'agent de réduction, par rapport au moment où le débit des gaz d'échappement est important.

3. Système de purification des gaz d'échappement pour un moteur à combustion interne (1) selon la revendication 1 ou 2, dans lequel
le catalyseur de purification des gaz d'échappement (7) est un catalyseur de réduction sélective de NOx, et
lorsque le débit des NOx s'écoulant dans le catalyseur de purification des gaz d'échappement (7) est faible, le régulateur de pression (20) diminue la pression d'ajout de l'agent de réduction, par rapport au moment où le débit des NOx est important.

4. Système de purification des gaz d'échappement pour un moteur à combustion interne (1) selon l'une quelconque des revendications 1 à 3, dans lequel
lorsqu'une pression de gaz d'échappement dans le passage d'échappement (3) est élevée, le régulateur de pression (20) augmente la pression d'ajout de l'agent de réduction, par rapport au moment où la pression de gaz d'échappement est faible.
